Europäisches Patentamt

European Patent Office

Office européen des brevets

(19)

(11) Veröffentlichungsnummer: **0 007 069**
**B1**

(12) **EUROPÄISCHE PATENTSCHRIFT**

(45) Veröffentlichungstag der Patentschrift:
06.01.82

(21) Anmeldenummer: 79102275.9

(22) Anmeldetag: 04.07.79

(51) Int. Cl.³: **H 04 L 11/15**, H 04 L 13/00, H 04 Q 5/00

(54) Schaltungsanordnung zur wahlweisen Anschaltung einer von mindestens zwei Fernschreibmaschinen an eine gemeinsame Anschlussleitung.

(30) Priorität: 13.07.78 DE 2830894

(43) Veröffentlichungstag der Anmeldung:
23.01.80 Patentblatt 80/2

(45) Bekanntmachung des Hinweises auf die Patenterteilung:
06.01.82 Patentblatt 82/1

(84) Benannte Vertragsstaaten:
CH FR GB IT NL SE

(56) Entgegenhaltungen:
DE-A-1 805 638
DE-A1-2 541 769
DE-A1-2 749 012
DE-B-1 537 353
DE-B2-2 360 635

(73) Patentinhaber: SIEMENS AKTIENGESELLSCHAFT Berlin
und München, Postfach 22 02 61, D-8000 München 22 (DE)

(72) Erfinder: Bachner, Alfred, Falkenstrasse 2a,
D-8031 Gröbenzell (DE)
Erfinder: Vogl, Herbert, Höltystrasse 5,
D-8000 München 70 (DE)

BUNDESDRUCKEREI BERLIN

## Schaltung zur wahlweisen Anschaltung einer von mindestens zwei Fernschreibmaschinen an eine gemeinsame Anschlußleitung

Die Erfindung betrifft eine Schaltungsanordnung zur wahlweisen Anschaltung einer von mindestens zwei Fernschreibmaschinen an eine gemeinsame Anschlußleitung mit einem jeder Fernschreibmaschine zugeordneten Steuerteil und einem Leitungsanpassungsteil zur Bewertung der in ankommender Richtung auf der Anschlußleitung auftretenden und zur Erstellung der über die Anschlußleitung auszusendenden Zustandsänderungen.

Der weltweite Einsatz der Fernschreibtechnik erfordert Fernschreibmaschinen für die verschiedensten Schriftzeichen. So sind beispielsweise Fernschreibmaschinen für lateinische und für arabische Schriftzeichen bekannt. Es treten nun aber auch Fälle auf, die den gemeinsamen Einsatz von Fernschreibmaschinen für verschiedene Schriftzeichen erfordern. Dabei müssen beide Fernschreibmaschinen über eine gemeinsame Anschlußleitung an das Fernschreibnetz anschaltbar sein, wobei diese Anschaltung wahlweise durchführbar sein muß, um eine Verbindung zu der einen oder zu der anderen Fernschreibmaschine zu ermöglichen. Bekanntlich sind zur Anschaltung von Fernschreibmaschinen an die zur eigentlichen Vermittlungsstelle führende Anschlußleitung Einrichtungen vorgesehen, die als sogenannte Fernschaltgeräte oder neuerdings als sogenannte Fernschalteinheiten bezeichnet werden. Eine bekannte Fernschalteinheit (DE-AS 2 360 635) besitzt einen Steuerteil und einen Leitungsanpassungsteil. Der Steuerteil kann dabei die Aufgaben bekannter Fernschaltgeräte übernehmen. Im Leitungsanpassungsteil werden einerseits durch Bewertung der auf der Anschlußleitung herrschenden Zustände Kriterien gebildet und an den Steuerteil weitergegeben; zum anderen werden durch Bewertung der im Steuerteil gebildeten Kriterien die Zustände auf der Anschlußleitung geändert. Eine solche Fernschalteinheit gestattet zwar in vorteilhafter Weise eine Anpassung an die verschiedensten Übertragungsverfahren auf der Anschlußleitung, wobei an die angeschalteten Endgeräte selbst keine besonderen Forderungen mehr gestellt werden, doch eignet sich diese bekannte Anordnung nicht für den Anschluß mehrerer Endgeräte, zu denen ein wahlfreier Zugriff möglich sein soll. Es ist zwar aus der zitierten Auslegeschrift bereits eine Möglichkeit zur Anschaltung eines Zusatzgerätes bekannt, doch gestattet diese Anordnung lediglich einen Mitlesebetrieb.

Aufgabe der Erfindung ist es, eine Anordnung zur Anschaltung einer von zwei Fernschreibmaschinen an eine gemeinsame Anschlußleitung zu schaffen, bei der wahlweise sowohl in abgehender als in ankommender Richtung die eine oder die andere Fernschreibmaschine an die Anschlußleitung anschaltbar ist und bei der weiterhin die Betriebseigenschaften der jeweils nicht angeschalteten Maschine für einen Lokalbetrieb nicht beeinflußt werden.

Gelöst wird diese Aufgabe gemäß den Merkmalen des Patentanspruches 1.

Die Vorteile der erfindungsgemäßen Schaltungsanordnung liegen vor allem darin, daß ein Leitungsbetrieb jeweils nur mit einer Fernschreibmaschine besteht, wobei auch während der Anschaltung der einen Fernschreibmaschine die andere im Lokalbetrieb ungestört weiterarbeiten kann. Weiterhin kann die Anordnung als Sonderbaugruppe jederzeit ohne nennenswerten Aufwand in bestehende Anlagen eingesetzt werden bzw. wieder entfernt werden. Änderungen im relativ aufwendigen Steuerteil einer Fernschalteinheit sind nicht erforderlich.

Weitere Einzelheiten der Erfindung werden im folgenden anhand der Zeichnungen erläutert. Dort zeigt

Fig. 1 ein Ausführungsbeispiel der Anschlußtechnik für zwei Fernschreibmaschinen in Form eines Blockschaltbildes,

Fig. 2 Einzelheiten einer Auswerteeinheit,

Fig. 3 den Signalisierungsablauf bei einer ankommenden Belegung und einem vom Vermittlungsamt ankommenden Auslösekriterium,

Fig. 4 einen Ablauf zur Unterbrechung eines Lokalbetriebes an einer ausgewählten Fernschreibmaschine und

Fig. 5 schließlich den Signalisierungsablauf bei einer abgehenden Belegung und einer vom rufenden Teilnehmer ausgehenden Auslösung der Verbindung.

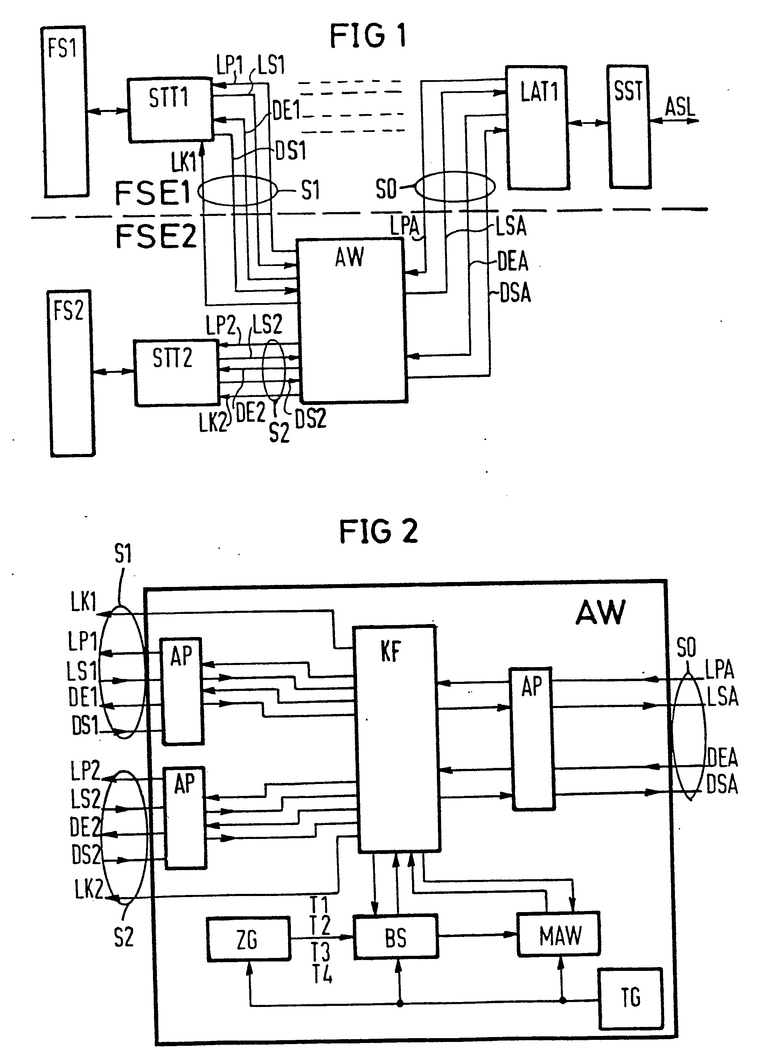

Das in Fig. 1 dargestellte Ausführungsbeispiel zeigt links die beiden Fernschreibmaschinen FS1 und FS2, von denen die eine beispielsweise für lateinische und die andere für arabische Schriftzeichen vorgesehen ist. Jeder Fernschreibmaschine ist eine Fernschalteinheit FSE1 und FSE2 zugeordnet, von denen die Fernschalteinheit FSE1 in bekannter Weise aufgebaut ist. Sie enthält den Steuerteil STT1 und den Leitungsanpassungsteil LAT1, sowie einen Störschutzteil SST, der zwischen dem Leitungsanpassungsteil LAT1 und der für beide Fernschreibmaschinen gemeinsamen Anschlußleitung ASL. angeordnet ist. Die Schnittstellenleitungen S0 des Leitungsanpassungsteiles LAT1 sind mit den Eingängen eines Auswerteteiles AW verbunden, der Bestandteil der der zweiten Fernschreibmaschine FS2 zugeordneten Fernschalteinheit FSE2 ist. Die zweite Fernschalteinheit FSE2 enthält ebenfalls einen Steuerteil STT2, der hinsichtlich seines Aufbaues und seiner Wirkungsweise dem Steuerteil STT1 in der Fernschalteinheit FSE1 entspricht. Der Auswerteteil AW ist über die Schnittstellenleitungen S1 und S2 mit den beiden Steuerteilen STT1 und STT2 verbunden. Jede Schnittstelle S0, S1 und S2 umfaßt vier Leitungen, nämlich eine Leitung (LP ...) zur Übertragung eines der Polarität der Anschlußleitung entsprechenden Kriteriums, eine Leitung (LS ...) zur Übertragung eines den Strom auf der Anschlußleitung einstellenden Kriteriums, eine Leitung (DE . . .) zur Übertragung von über die Anschlußleitung eintreffenden Empfangsdaten und eine Leitung (Ds . . .) zur Übertragung der auf die Anschlußleitung auszusendenden Sendedaten. Die Schnittstellenleitungen S1 und S2 besitzen darüber hinaus noch je eine Steuerleitung LK1 und LK2, über die ein Kriterium zur zwangsweisen Abschaltung eines laufenden Lokalbetriebes übertragen wird. Die Schnittstellenleitungen S0 sind im einzelnen mit LPA, LSA, DEA und DSA, die der Schnittstellenleitung S1 mit LP1, LS1, DE1, DS1 und LK1 sowie die Schnittstellenleitungen S2 mit LP2, LS2, DE2 und LK2 bezeichnet. Die Bildung der Kriterien für die Steuerteile STT1 und STT2 werden im Leitungsanpassungsteil LAT1 der Fernschalteeinheit FSE1 durch Bewertung der Zustände auf der Anschlußleitung ASL gebildet. Das entsprechende Kriterium für die Leitungspolarität wird über die Leitung LPA und die den empfangenen Daten entsprechenden Kriterien werden über die Leitung DEA an den Auswerteteil AW übertragen. Im Anpassungsteil LAT1 findet auch die Änderung der Zustände auf der Anschlußleitung ASL durch Bewertung der von den Steuerteilen STT1 und STT2 bzw. vom Auswerteteil AW ausgehenden Kriterien statt, wobei das Kriterium zur Leitungsstromänderung über die Leitung LSA und die den auszusendenden Daten entsprechenden Kriterien über die Leitung DSA vom -Auswerteteil AW an den Leitungsanpassungsteil LAT1 übertragen werden. Die Weitergabe der über die Leitungen LPA und DEA eintreffenden Kriterien an die Steuerteile STT1 bzw. STT2 geschieht über die Leitungen LP1 und DE1 bzw. LP2 und DE2. Die Übertragung der Kriterien von den Steuerteilen STT1 bzw. STT2 zum Auswerteteil AW geschieht über die Leitungen LS1 und DS1 bzw. LS2 und DS2. Die Schnittstellenleitungen S0 und S1 können ebenso wie die gestrichelt eingezeichneten Verbindungen zwischen dem Steuerteil STT1 und dem Leitungsanpassungsteil LAT1 steckbar ausgeführt sein, so daß bedarfsweise jederzeit und ohne nennenswerten Aufwand eine Umrüstung auf einen Betrieb mit einer einzigen Fernschreibmaschine möglich ist.

Der erfindungsgemäß vorgesehene Auswerteteil AW sowie dessen Anschaltung an den Leitungsanpassungsteil LAT1 über die Schnittstellenleitungen S0 und an die Steuerteile STT1 und STT2 über die Schnittstellenleitungen S1 und S2 ermöglicht eine einfache Auswahl und Anschaltung einer der beiden Fernschreibmaschinen FS1 bzw. FS2. Zur Erläuterung weiterer Einzelheiten wird nunmehr auf Fig. 2 verwiesen. Der dort dargestellte Auswerteteil AW enthält ein Koppelfeld KF, an das über Anpassungsschaltungen AP die Schnittstellenleitungen S0, S1 und S2 angeschlossen sind. Diese Anpassungsschaltungen AP dienen im wesentlichen zur Umsetzung auf den für die Bauelemente des Auswerteteiles vorgesehenen Pegel. Das Koppelfeld KF ist über eine Betriebssteuerung BS

sowie über eine Maschinenauswahlschaltung MAW steuerbar. Die Maschinenauswahlschaltung MAW bewertet ein für die Anschaltung einer der beiden Fernschreibmaschinen vereinbartes Kriterium, beispielsweise eine bestimmte Buchstabenfolge. Weiterhin enthält der Auswerteteil AW einen Zeitgeber ZG, der in Zusammenarbeit mit der Betriebssteuerung BS die zur Bewertung der vorkommenden Signalisierungszustände notwendigen Überwachungszeiten liefert. Zeitgeber ZG, Betriebssteuerung BS und Maschinenauswahlschaltung MAW werden mit den Takten eines gemeinsamen Taktgebers TG versorgt. Das Koppelfeld KF kann beispielsweise aus einer Gatterlogik bestehen, über die die Schnittstellenleitungen S1 oder S2 mit den Schnittstellenleitungen S0 verbunden werden. In der Betriebssteuerung BS sind eine Reihe von Kippstufen vorhanden, die in hier nicht dargestellter Weise entsprechend den über die Schnittstellenleitungen S0, S1 und S2 angebotenen Kriterien steuerbar sind und die einen Ruheeinen Schreib-, einen Auslöse- und einen Rufzustand bei ankommender Belegung bestimmen. Während des Ruhezustandes des Auswerteteiles AW erfolgt lediglich eine Überwachung der Leitung LPA sowie der Datensendeleitungen DS1 und DS2. In diesem Falle besteht keine Durchschaltung zwischen den einzelnen Schnittstellenleitungen über das Koppelfeld KF. Die Einleitung eines von einer Fernschreibmaschine FS1 oder FS2 ausgehenden Verbindungswunsches, also eine abgehende Belegung, wird durch Bewertung des Anrufkriteriums im Auswerteteil AW erkannt und führt dort zum Übergang vom Ruhe- in den Schreibzustand. Dabei werden abhängig von der Maschinenauswahlschaltung MAW im Koppelfeld KF die Schnittstellenleitungen S1 oder S2 des der rufenden Fernschreibmaschine FS1 oder FS2 zugeordneten Steuerteiles STT1 oder STT2 mit den Schnittstellenleitungen S0 verbunden. Während bei einem abgehenden Ruf die Auswahl der den Verbindungswunsch äußernden Fernschreibmaschine in einfacher Weise durch Bewertung des entsprechenden Anrufkriteriums auf einer der Leitungen LS1 oder LS2 in Verbindung mit dem Zustand der Datensendeleitung DS1 oder DS2 ermittelt werden kann, muß bei einem ankommenden Ruf vor Herstellung des Schreibzustandes noch die Bewertung eines Auswahlcodes durchgeführt werden. Dieser Auswahlcode wird von der Vermittlungsstelle im Anschluß an eine Rufbestätigung über die Anschlußleitung übertragen und in der Maschinenauswahlschaltung MAW bewertet. Das geschieht innerhalb einer durch den Zeitgeber ZG vorgegebenen Überwachungszeit, die nach dem Aussenden des den Empfang eines ankommenden Anrufsignals über die Leitung LPA bestätigenden Rufbestätigungskriteriums gestartet wird. In diesem Falle erfolgt die Einstellung des Koppelfeldes KF, über das nunmehr die Schnittstellenleitung S0 mit den Schnittstellenleitungen S1 oder S2 der ausgewählten Fernschreibmaschine verbunden werden, erst nach Ablauf der für den Empfang des Auswahlcodes vorgesehenen Zeitdauer. Nach Eintreffen eines Belegungsbestätigungskriteriums von der gewünschten Fernschreibmaschine nimmt der Auswerteteil AW nunmehr auch den Schreibzustand ein. Gleichzeitig mit dem Durchschalten der Verbindung über das Koppelfeld KF wird im Zeitgeber ZG eine weitere Überwachungszeit gestartet. Für den FAll nämlich, daß die gewählte Fernschreibmaschine im Lokalbetrieb arbeitet und ihre Belegung nicht sofort bestätigen kann, wird nach Ablauf dieser Überwachungszeiten ein Kriterium übe die Steuerleitung LK1 bzw. LK2 an den der ausgewählten Fernschreibmaschine FS1 bzw. FS2 zugeordneten Steuerteil STT1 bzw. STT2 gesendet, durch das dort zwangsweise der Lokalbetrieb abgeschaltet wird. Trifft nach Aussendung dieses Kriteriums weiterhin kein Belegungsbestätigungskriterium ein, erfolgt die Auslösung der teilaufgebauten Verbindung.

Die Durchschaltung einer Verbindung über das Koppelfeld KF im Auswerteteil AW bleibt bis zum Eintreffen eines Auslösekriteriums bestehen, wobei jedoch nunmehr der Auswerteteil AW keine steuernden Funktionen mehr durchführt. Diese werden vielmehr in Zusammenarbeit zwischen dem der ausgewählten Fernschreibmaschine zugeordneten Steuerteil und dem Leitungsanpassungsteil in an sich bekannter Weise abgewickelt. Die Mitwirkung des Auswerteteils AW beginnt erst wieder nach Beendigung einer Nachrichtenübertragung. Dazu werden die Leitung LPA und die Datenempfangsleitung DSA innerhalb der Schnittstellenleitungen S0, die Leitungen LS1 bzw. LS2 sowie die Datensendeleitungen DS1 und DS2 innerhalb der Schnittstellenleitungen S1 und S2 in der Betriebssteuerung DS des Auswerteteiles AW auf die einem als Schlußzeichen vereinbarten Auslösekriterium entsprechenden Zustände überwacht. Ein über die Anschlußleitung ASL eintreffendes Schlußzeichen, mit dem sich die Leitungspolarität auf der Anschlußleitung ASL ändert, führt im Leitungsanpassungsteil LAT1 zur Bildung eines Kriteriums auf der Leitung LPA und auf der Datenempfangsleitung DEA. Ein durch Betätigung der Schlußtaste in der ausgewählten Fernschreibmaschine gebildetes Schlußzeichen führt über den zugeordneten Steuerteil zur Aussendung eines Kriteriums auf der Leitung LS1 bzw. LS2 und auf der Datensendeleitung DS1 bzw. DS2. Die in der Betriebssteuerung BS vorgesehenen Bewertungsschaltmittel, vorzugsweise Kippstufen, werden durch diese Kriterien entsprechend umgesteuert und ermöglichen, daß über die weiterführenden Schnittstellenleitungen diese Kriterien weitergesendet werden. Im Falle des über die Anschlußleitung ASL1 eintreffenden Schlußzeichens wird somit über den Auswerteteil AW auch ein Polaritätsänderungskriterium über die Leitungen LP1 oder LP2 übertragen und die Datemempfangsleitungen DE1 oder DE2 gepolt. Im Falle des von einer Fernschreibmaschine ausgehenden Schlußzeichens wird dieses über den Auswerteteil AW auf der Leitung LSA und auf der Datensendeleitung DSA weitergeleitet.

Um sicherzustellen, daß nach der Auslösung einer Verbindung die vorgeschriebene Schutzzeit gegen eine neue abgehende Belegung gewährleistet ist, wird nach dem Umpolen der Anschlußleitung ASL und dem Einnehmen des Ruhezustandes der über das Koppelfeld KF durchverbundenen Fernschreibmaschine stets auch der Zeitgeber ZG eingeschaltet und eine für den Auslösezustand vorgesehene weitere Überwachungszeit gestartet. Dadurch ist gewährleistet, daß erst nach Ablauf dieser Überwachungszeit die vorher nicht angeschaltete Fernschreibmaschine für eine neue abgehende Belegung freigegeben wird.

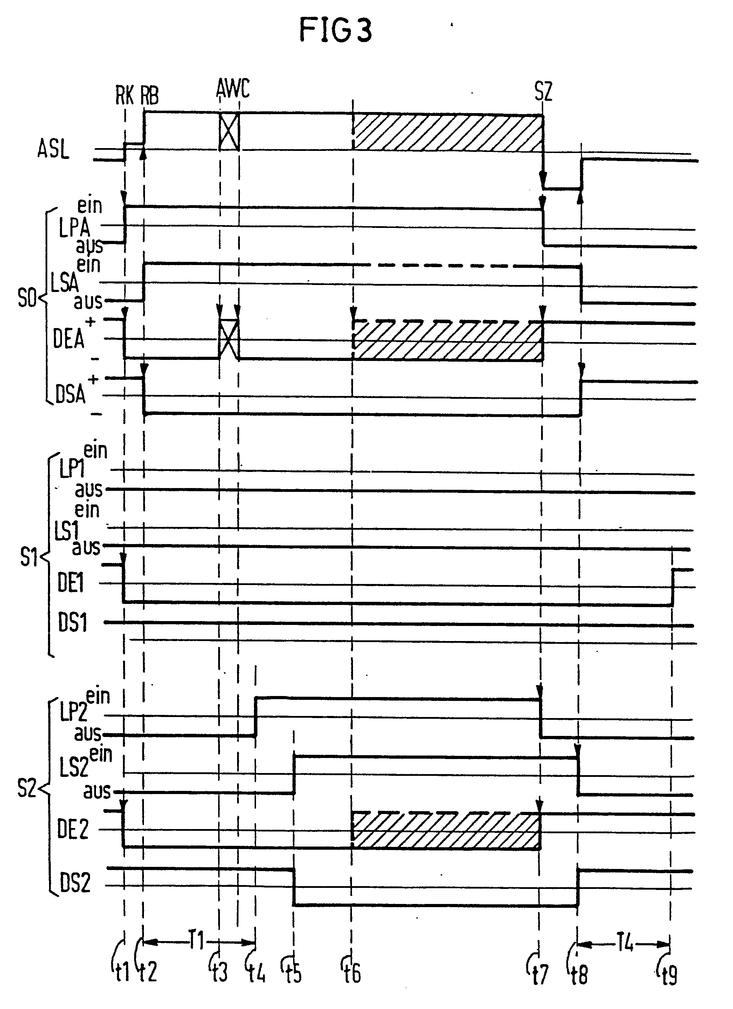

Im folgenden wird nun die Wirkungsweise der Schaltungsanordnung anhand von Fig. 3, Fig. 4 und Fig. 5 am Beispiel für zwei typische Signalabläufe erläutert.

Zunächst werden anhand von Fig. 3 die bei einer ankommenden Belegung sowie die bei einem über die Anschlußleitung ankommenden Auslösekriterium ablaufenden Vorgänge beschrieben. In der ersten Zeile ist dabei der Zustand auf der Anschlußleitung ASL und in den folgenden Zeilen sind jeweils die Zustände auf den Schnittstellenleitungen S0, S1 und S2 dargestellt. Die Bezeichnung der einzelnen Leitungen innerhalb der Schnittstellenleitungen S0, S1 und S2 entsprechen den in den Fig. 1 und 2 verwendeten Bezeichnungen.

Es wird angenommen, daß zum Zeitpunkt t1 auf der Anschlußleitung ASL ein Anrufkriterium RK eintrifft. Entsprechend einem als Beispiel hier angenommenen Signalisierungsverfahren wird dabei die Anschlußleitung ASL umgepolt (von −5 mA auf +5 mA). Diese Umpolung wird im Leitungsanpassungsteil LAT1 erkannt und über die Leitung LPA innerhalb der Schnittstellenleitungen S0 an den Auswerteteil AW gesendet. Dieser wird dadurch in den Rufzustand bei ankommender Belegung versetzt, in welchem beide Steuerteile STT1 und STT2 gegen eine abgehende Belegung gesperrt werden. Das geschieht im Beispiel durch Umpolen der Datenempfangsleitungen DE1 und DE2. Daraufhin wird z. B. nach etwa 10 ms zum Zeitpunkt t2 vom Auswerteteil AW das Rufbestätigungskriterium RB gebildet. Dazu wird die Leitung LSA eingeschaltet und die Datensendeleitung DSA umgepolt. Im Leitungsanpassungsteil LAT1 wird daraus eine Information zur Stromerhöhung (+40 mA) auf der Anschlußleitung ASL abgeleitet. Im Auswerteteil AW wird zugleich die Maschinenauswahlschaltung und der Zeitgeber freigegeben. Innerhalb einer durch den Zeitgeber festgelegten ersten Überwachungszeit T1, die z. B. etwa 600 ms beträgt, wird die Datenempfangsleitung DEA auf das Eintreffen eines Auswahlcodes AWC überwacht. Dieser Auswahlcode kann beispielsweise eine bestimmte Buchstabenkombination sein, die für die Anschaltung einer der beiden Fernschreibmaschinen, im Beispiel von Fig. 3 für die Anschaltung der Fernschreibmaschine FS2, vorgesehen ist. Es sei nun angenommen, daß dieser Auswahlcode AWC zum Zeitpunkt t3, also innerhalb der ersten Überwachungszeit T1, über die Anschlußleitung ASL eintrifft und von dort über den Leitungsanpassungsteil und die Datenempfangsleitung DEA an den Auswerteteil gelangt. Die Bewertung des Auswahlcodes AWC führt nun dort dazu, daß mit dem Ablauf der ersten Überwachungszeit T1 unter Steuerung der Maschinenauswahlschaltung die zum Steuerteil der ausgewählten Fernschreibmaschinen führende Leitung LP2 eingeschaltet wird und damit nun auch diesem Steuerteil das Anrufkriterium mitgeteilt wird. Das geschieht zum Zeitpunkt t4. Die erfolgreiche Belegung wird vom ausgewählten Steuerteil nunmehr durch Einschaltung der Leitung LS2 bestätigt, was zum Zeitpunkt t5 geschieht. Zugleich damit wird auch die Datensendeleitung DS2, die den Auswerteteil mit dem ausgewählten Steuerteil verbindet, umgepolt. Der Auswerteteil nimmt den Schreibzustand ein und verbindet nunmehr die Schnittstellenleitungen S2 mit den Schnittstellenleitungen S0. Damit besteht eine durchgeschaltete Verbindung zwischen der Anschlußleitung, dem Leitungsanpassungsteil, dem Steuerteil und der ausgewählten Fernschreibmaschine. Sämtliche weiteren Steuervorgänge, wie beispielsweise der Austausch weiterer Identifizierungskennzeichen zwischen der ausgewählten Fernschreibmaschine und dem Vermittlungsamt findet nun zwischen der der ausgewählten Fernschreibmaschine zugeordneten Steuerung und dem Vermittlungsamt statt. Das trifft auch auf die Übermittlung der eigentlichen Nachricht zu. An diesen Vorgängen ist der Auswerteteil nicht mehr aktiv beteiligt. Allerdings ist während der gesamten Verbindungsdauer die nicht ausgewählte Fernschreibmaschine abgehend gesperrt. Dazu bleibt die Datenempfangsleitung DE1 während dieser Zeitdauer im ungepolten Zustand.

Trifft innerhalb der vorgesehenen ersten Überwachungszeit T1 das Auswahlkriterium AWC nicht ein, so gilt das als ein Kriterium dafür, daß die andere, im Beispiel die Fernschreibmaschine FS1 angeschaltet werden soll. In diesem Falle laufen die beschriebenen Vorgänge in der gleichen Weise ab, wobei nunmehr jedoch die Schnittstellenleitungen S1 zu den angegebenen Zeiten eingeschaltet bzw. umgepolt werden, und die Verbindung durch das Durchschalten der Schnittstellenleitungen S1 und S0 hergestellt wird. Zum Zeitpunkt t6 ist die Durchschaltung der ankommenden Verbindung zu der ausgewählten Fernschreibmaschine hergestellt. Zwischen den Zeitpunkten t6 und t7 findet nun in üblicher Weise der Nachrichtenaustausch statt. Die nicht ausgewählte Fernschreibmaschine kann während dieser Zeitdauer ungestört einen Lokalbetrieb entwickeln.

Das Eintreffen eines Schlußzeichens SZ in Form einer Leitungsumpolung auf der Anschlußleitung ASL (von +40 mA auf −40 mA) signalisiert das Auslösekriterium. Im Leitungsanpassungsteil LAT1 wird das Schlußzeichen SZ als Zustandsänderung erkannt und führt zur Ausschaltung der Leitung LPA. Damit werden auch die Datenempfangsleitungen DEA und DE2 umgepolt. Zugleich wird auch die zum Steuerteil der ausgewählten Fernschreibmaschine führende Leitung LP2 ausgeschaltet und dadurch dort nach einer kurzen Reaktionszeit zum Zeitpunkt t8 die Leitungen LS2 ausgeschaltet und die Datensendeleitungen DS2 umgepolt. Über den Auswerteteil führt das zur Ausschaltung der Leitung LSA und zur Umpolung der Datensendeleitung DSA. Die Durchschaltung der Verbindung über das Koppelfeld im Auswerteteil bleibt zunächst bestehen. Die Ausschaltung der Leitung LSA zum Zeitpunkt t8 führt über den Leitungsanpassungsteil auf der Anschlußleitung ASL zur Einstellung des Ruhestromes. Um innerhalb der für Vermittlungssysteme vorgesehenen Schutzzeit für eine erneute Belegung der Vermittlungsstelle eine Belegung durch die nicht angeschaltete Fernschreibmaschine zu vermeiden, ist eine vierte Überwachungszeit T4 vorgesehen, nach deren Ablauf die Durchschaltung der Verbindung über das Koppelfeld aufgehoben und damit auch die zu der Steuereinheit der vorher nicht angeschalteten Fernschreibmaschine führende Datenempfangsleitung DE1 umgepolt wird. Das geschieht zum Zeitpunkt t9. Bis zu diesem Zeitpunkt ist die nicht angeschaltete Fernschreibmaschine für eine abgehende Belegung gesperrt.

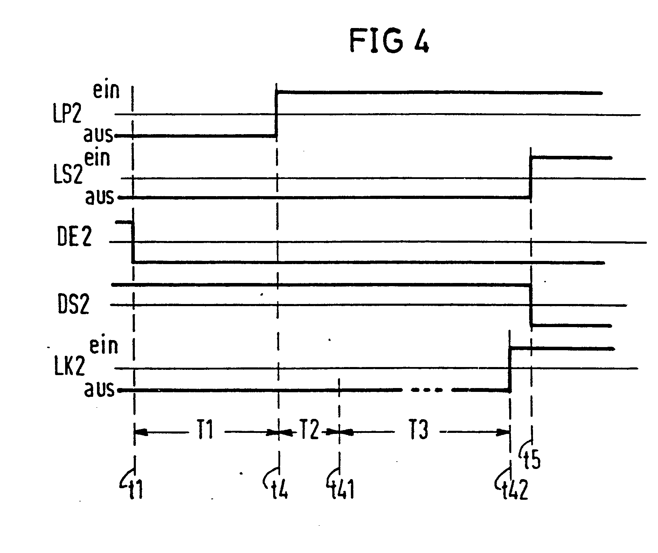

Befindet sich eine ausgewählte Fernschreibmaschine beim Eintreffen des Belegungskriteriums, das ihr durch Einschaltung der Leitung LP1 oder LP2 mitgeteilt wird, im Lokalbetrieb, so trifft innerhalb der vorgesehenen zweiten Überwachungszeit T2 das Belegungs-Bestätigungskriterium, das durch Einschalten der Leitung LS1 oder LS2 gebildet wird, nicht im Auswerteteil ein. In diesem Fall wird eine dritte Überwachungszeit gestartet, nach deren Ablauf der Lokalbetrieb zwangsweise beendet wird. Einzelheiten dieses Ablaufes sind in Fig. 4 dargestellt. Dort ist, ausgehend von dem für Fig. 3 gewählten Beispiel, angenommen worden, daß nach dem Ablauf der ersten Überwachungszeit T1 zum Zeitpunkt t4 dem Steuerteil der ausgewählten Fernschreibmaschine durch Einschalten der Leitung LP2 das Belegungskriterium übermittelt wurde, und daß innerhalb der vorgesehenen zweiten Überwachungszeit T2, die beispielsweise 140 ms betragen kann, ein Bestätigungskriterium für diese Belegung nicht eintrifft. Zum Zeitpunkt t41 beginnt deshalb die dritte Überwachungszeit T3 zu laufen, die beispielsweise 1,4 s betragen kann. Trifft auch bis zum Ablauf dieser dritten Überwachungszeit T3 das Bestätigungskriterium für die Belegung nicht im Auswerteteil ein, so wird zum Zeitpunkt t42 die Steuerleitung LK2 eingeschaltet und bei der ausgewählten Fernschreibmaschine ein Lokalbetrieb zwangsweise beendet. Nach einer kurzen Reaktionszeit trifft nun das Bestätigungskriterium zum Zeitpunkt t5 ein, wobei die Leitung LS2 eingeschaltet und die Datensendeleitung DS2 umgepolt wird. Die weiteren Abläufe schließen sich nun in der anhand von Fig. 3 beschriebenen Weise an.

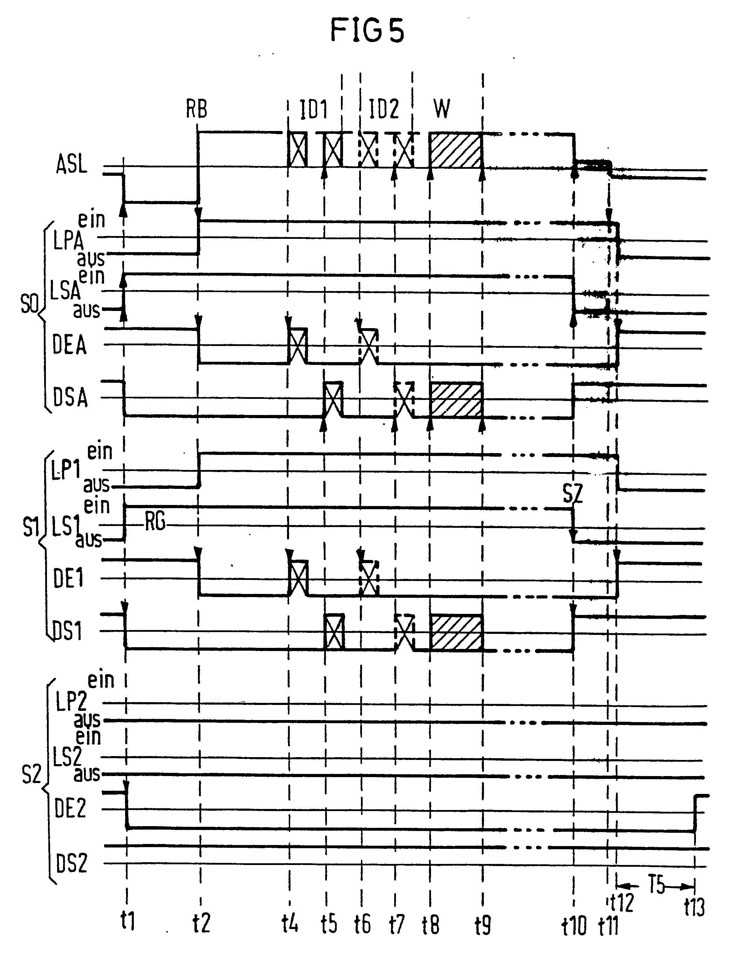

Die Vorgänge bei einer abgehenden Belegung und bei einer vom Teilnehmer ausgehenden Auslösung einer Verbindung werden im folgenden anhand von Fig. 5 erläutert. Wiederum sind dort in der ersten Zeile die Zustände auf der Anschlußleitung ASL und in den folgenden Zeilen die Zustände auf den Schnittstellenleitungen S0, S1 und S2 dargestellt.

Es wird angenommen, daß zum Zeitpunkt t1 durch Bestätigung der Anruftaste bei einer Fernschreibmaschine eine abgehende Belegung gewünscht wird. Das Beispiel geht von der Belegung in der Fernschreibmaschine FS1 aus. Das Rufkriterium RG wird somit durch Einschalten der Leitung LS1 und durch Umpolung der Datensendeleitung DS1 dem Auswerteteil mitgeteilt und dort bewertet. Der Auswerteteil schaltet seinerseits nach der Bewertung die Zustände auf diesen Leitungen an die zum Leitungsanpassungsteil führenden Leitungen LSA und DSA durch, d. h., es wird die Leitung LSA eingeschaltet und die Datensendeleitung DSA umgepolt. Um die zweite Fernschreibmaschine gegen eine abgehende Belegung zu sperren, wird auch die zum Steuerteil dieser Fernschreibmaschine führende Datenempfangsleitung DE2 umgepolt. Über den Leitungsanpassungsteil wird die Einschaltung der Leitung LSA in an sich bekannter Weise zur Aussendung des Rufkriteriums auf die Anschlußleitung ASL bewertet. Im Falle einer abgehenden Belegung nimmt der Auswerteteil bereits zu diesem Zeitpunkt seinen Schreibzustand ein und gibt die Durchschaltung der Schnittstellenleitungen S1 zu den Schnittstellenleitungen S0 frei. Mit dem Erreichen des Schreibzustandes übernimmt der Steuerteil der rufenden Fernschreibmaschine den weiteren Verbindungsaufbau, wobei alle Signale und Informationen über die durchgeschaltete Verbindung im Auswerteteil laufen. Das gilt für das zum Zeitpunkt t2 über die Anschlußleitung ASL eintreffende Rufbestätigungskriterium RB, das im Leitungsanpassungsteil zur Einschaltung der Leitung LPA und zur Umpolung der Datenempfangsleitung DEA führt, und das somit über den Auswerteteil an den Steuerteil der rufenden Fernschreibmaschine übertragen wird, indem die Leitung LP1 eingeschaltet und die Datenempfangsleitung DE1 umgepolt wird. Weiterhin werden über diesen durchgeschalteten Verbindungsweg zu den Zeitpunkten t4, t5, t6 und t7 weitere Identifizierungskennzeichen übertragen. Diese sind erforderlich, um der Vermittlungsstelle Kenntnis davon zu geben, welche der beiden Fernschreibmaschinen den Anrufwunsch geäußert hatte. Kann beispielsweise die Identifizierung bereits durch Empfang des ersten Identifizierungskriteriums ID1 getroffen werden, so unterbleibt die Anforderung der zweiten Identifizierungskennzeichnung ID2. In Fig. 5 ist diese deshalb gestrichelt eingezeichnet worden, da das Beispiel vom Anruf der ersten Fernschreibmaschine ausgeht. Zwischen den Zeitpunkten t8 und t9 findet die Aussendung der Wahlinformation statt, die ebenfalls über den durchgeschalteten Verbindungsweg an den Leitungsanpassungsteil und von dort auf die Anschlußleitung ASL zur übergeordneten Vermittlungsstelle gesendet wird. Nach Aufbau der Verbindung zu einem nicht dargestellten gerufenen Teilnehmer findet der Nachrichtenaustausch statt.

Die Auslösung der Verbindung wird im dargestellten Beispiel durch Betätigung der Schlußtaste beim Teilnehmer eingeleitet. Dadurch wird die Leitung LS1 im Steuerteil der betreffenden Fernschreibmaschine zum Zeitpunkt t10 ausgeschaltet und zugleich die Datensendeleitung DS1 umgepolt. Diese beiden Kriterien führen über den Auswerteteil zur Ausschaltung der zum Leitungsanpassungsteil führenden Leitung LSA sowie zur Umpolung der Leitung DSA. Dadurch wird eine Stromerniedrigung auf der Anschlußleitung ASL durchgeführt. In bekannter Weise bildet die Vermittlungsstelle ein Auslösebestätigungskriterium durch Umpolung der Anschlußleitung ASL, das zum Zeitpunkt t11 eintrifft und nach einer Reaktionszeit zur Ausschaltung der Leitung LPA führt, wodurch auch die Leitung LP1 ausgeschaltet wird und die Datenempfangsleitungen DEA und DE1 umgepolt werden. Um auch in diesem Falle eine erneute vorzeitig abgehende Belegung der vorher nicht angeschalteten Fernschreibmaschine zu verhindern, ist auch hierbei die weitere Überwachungszeit T4 vorgesehen, die zum Zeitpunkt t12 gestartet wird und nach deren Ablauf auch die zum Steuerteil der vorher nicht angeschalteten Fernschreibmaschine führende Datenempfangsleitung DE2 umgepolt wird. Damit ist der Auslösevorgang beendet und der Auswerteteil befindet sich wieder in seinem Ruhezustand.

## Patentansprüche

1. Schaltungsanordnung zur wahlweisen Anschaltung einer von mindestens zwei Fernschreibmaschinen an eine gemeinsame Anschlußleitung (ASL) mit einem Leitungsanpassungsteil (LAT1) der durch Bewertung der in ankommender Richtung auf der Anschlußleitung (ASL) auftretenden Zustandsänderungen bestimmte Kriterien erzeugt und diese an einen Steuerteil (Stt1, STT2) weitergibt, und der durch Auswertung von im Steuerteil (STT1, STT2) gebildeter Kriterien Zustandsänderungen in abgehender Richtung auf der Anschlußleitung (ASL) durchführt, dadurch gekennzeichnet, daß die den Fernschreibmaschinen (FS1, FS2) zugeordneten Steuerteile (STT1, STT2) über Schnittstellenleitungen (S1, S2) an einen Auswerteteil (AW) angeschlossen sind, der in Richtung zur Anschlußleitung (ASL) über weitere Schnittstellenleitungen (S0) mit dem Leitungs-

anpassungsteil (LAS1) verbunden ist,
daß im Auswerteteil (AW) Bewertungsschaltmittel (BS) vorgesehen sind, die ein von einem Steuerteil (STT1, STT2) übertragenes, abgehendes Rufkriterium (RG), ein vom Leitungsanpassungsteil (LAT1) übertragenes ankommendes Rufkriterium (RK) und das Auslösekriterium (SZ) derart bewerten, daß bei einem abgehenden Rufkriterium (RG) ein Durchschaltemittel (KF) für die Schnittstellenleitungen (S1, S2, S0), bei einem ankommenden Rufkriterium (RK) zunächst sowohl ein Auswerteschaltmittel (MAW) zur Bewertung eines Auswahlkriteriums (AWC) als auch ein Zeitgeber (ZG) eingeschaltet wird, und die Einschaltung des Durchschaltemittels (KF) mindestens um eine durch den Zeitgeber (ZG) bestimmte erste Überwachungszeit (T1) zur Bewertung des Auswahlkriteriums (AWC) verzögert erfolgt,
daß durch den Zeitgeber (ZG) eine zweite Überwachungszeit (T2) für das zeitrichtige Eintreffen eines Belegungskriteriums und eine dritte Überwachungszeit (T3) für das zeitrichtige Abschalten eines Lokalbetriebes festgelegt ist, und daß durch Bewertung des Auslösekriteriums (SZ) der Zeitgeber (ZG) erneut eingeschaltet wird und eine vierte Überwachungszeit (T4) festlegt, nach deren Ablauf das Durchschaltemittel (KF) abgeschaltet wird.

2. Schaltungsanordnung nach Anspruch 1, dadurch gekennzeichnet,
daß der Auswerteteil (AW) durch Bewertung eines abgehenden Rufkriteriums (RG in Fig. 5) die Schnittstellenleitungen (S1 oder S2) des Steuerteiles (STT1 oder STT2), der das Rufkriterium aussendet, mit den zum Leitungsanpassungsteil (LAT1) führenden Schnittstellenleitungen (S0) ohne Zeitverzögerung durchschaltet und das Rufkriterium an den Leitungsanpassungsteil (LAT1) überträgt (LPA ein, LSA ein in Fig. 5),
daß durch Bewertung eines ankommenden Rufkriteriums (RK in Fig. 3) der Auswerteteil (AW) ein Rufbestätigungskriterium (RB in Fig. 3) aussendet (LSA ein in Fig. 3), daß der Auswerteteil (AW) in Abhängigkeit vom Eintreffen des Auswahlcodes (AWC) innerhalb der ersten Überwachungszeit (T1) das ankommende Rufkriterium (RK) an die ausgewählte Steuereinheit (z. B. STT2) aussendet (LP2 ein in Fig. 3), und daß die Schnittstellenleitungen (z. B. S2) des einen oder des anderen Steuerteiles mit den Schnittstellenleitungen (S0) des Leitungsanpassungsteiles (LAT1) nach Eintreffen des Belegungsbestätigungskriteriums (LS2 ein in Fig. 3) verbunden werden.

3. Schaltungsanordnung nach Anspruch 1 und 2, dadurch gekennzeichnet, daß nach Ablauf der ersten Überwachungszeit (T1) der Zeitgeber (ZG) zur Bestimmung der für das Eintreffen des Belegungsbestätigungskriteriums (LS2 ein in Fig. 3) vorgesehenen zweiten Überwachungszeit (T2 in Fig. 4) eingeschaltet ist.

4. Schaltungsanordnung nach Anspruch 1, dadurch gekennzeichnet, daß bei fehlendem Belegungsbestätigungskriterium innerhalb der zweiten Überwachungszeit (T2) der Zeitgeber (ZG) zur Bestimmung der dritten Überwachungszeit (T3) eingeschaltet ist, nach deren Ablauf der Auswerteteil (AW) ein Kriterium (z. B. LK2 ein in Fig. 4) zur zwangsweisen Abschaltung des Lokalbetriebes über eine zusätzliche Steuerleitung (LK1, LK2) innerhalb der zu den Steuerteilen (STT1, STT2) führenden Schnittstellenleitungen (S1, S2) aussendet.

5. Schaltungsanordnung nach Anspruch 1, dadurch gekennzeichnet, daß durch Bewertung des einem Schlußzeichen (SZ) folgenden Bestätigungskriteriums (LSA aus, DSA aus in Fig. 3; LPA aus, DEA aus in Fig. 5) der Zeitgeber (ZG) zur Bestimmung der vierten Überwachungszeit (T4) erneut eingeschaltet wird, nach deren Ablauf die Verbindung zwischen den Schnittstellenleitungen (S1 oder S2) des der vorher nicht ausgewählten Fernschreibmaschine zugeordneten Steuerteils (STT1 oder STT2) und den Schnittstellenleitungen (S0) des Anpassungsteiles (LAT1) aufgetrennt wird.

6. Schaltungsanordnung nach Anspruch 1, dadurch gekennzeichnet, daß jeweils der einer Fernschreibmaschine (z. B. FS1) zugeordnete Steuerteil (STT1) und der Leitungsanpassungsteil (LAT1) eine Fernschalteeinheit (FSE1), der der anderen Fernschreibmaschine (FS2) zugeordnete Steuerteil (STT2) und der Auswerteteil (AW) eine zweite Fernschalteeinheit (FSE2) bilden, daß die Fernschalteeinheiten (FSE1, FSE2) jeweils innerhalb der Fernschreibmaschinen (FS1, FS2) angeordnet sind, daß jeweils nur die den Leitungsanpassungsteil (LAT1) enthaltende Fernschalteeinheit (FSE1) mit der Anschlußleitung (ASL) verbunden ist, und daß die Schnittstellenleitungen (S1, S2, S0) zwischen den Fernschalteeinheiten (FSE1, FSE2) über steckbare Verbindungen verlaufen.

7. Schaltungsanordnung nach Anspruch 6, dadurch gekennzeichnet, daß zum Betrieb als Einzelmaschine die Schnittstellenleitungen (S1, S2, S0) über einen Brückenstecker verbunden sind.

## Claims

1. Circuit arrangement for selectively connecting one of at least two teleprinters to a common connection line (ASL) with a line matching component (LAT1) which, by evaluating the changes in status occurring on the connection line (ASL) in the incoming direction, produces specific criteria and forwards these to a control component (STT1, STT2) and which, by analysing criteria formed in the control component (STT1, STT2), implements chanes in status in the outgoing direction of the connection line (ASL), characterised in
that the control components (STT1, STT2) which are assigned to the teleprinters (FS1, FS2) are connected via interface lindes (S1, S2) to an analysis component (AW) which, in the direction leading towards the connection line (ASL), is connected to the line matching component (LAT1) via further interface lines (S0), that the analysis component (AW) contains evaluating switching means (BS) which evaluate an outgoing call criterion (RG) transmitted from a control component (STT1, STT2), an incoming call criterion (RK) transmitted from the line matching component (LAT1), and the clearing criterion (SZ) in such manner that in the event of an outgoing call criterion (RG) a switchthrough means (KF) for the interface lines (S1, S2, S0) is switched on, whereas in the case of an incoming call criterion (RK) firstly both an analysis switching means (MAW) for the evaluation of a selection criterion (AWC) and a timer (ZG) are switched on, and that the switching on of the switch-through means (KF) takes place with a delay of at least a first monitoring time (T1), determined by the timer (ZG), for the evaluation of the selection criterion (AWC), that the timer (ZG) determines a second monitoring time (T2) for the prompt arrival of a seizure criterion and a third monitoring time (T3) for the prompt disconnection of a local operation, and that the evaluation of the clearance criterion (SZ) results in the reconnection of the timer (ZG) and the determination of a fourth monitoring time (T4) on the expiration of which the switch-through means (KF) is disconnected.

. 2. Circuit arrangement as claimes in claim 1, characterised in that by evaluating an outgoing call criterion (RG in Fig. 5), the analysis component (AW) switches through the interface lines (S1 or S2) of the control component (STT1 or STT2) which transmits the call criterion, with the interface lines (S0) which lead to the line matching component (LAT1) without a delay, and transfers the call criterion to the line matching component (LAT1) (LPA on, LSA on in Fig. 5), that by evaluating an incoming call criterion (RK in Fig. 3) the analysis component (AW) transmits a call confirmation criterion (RB in Fig. 3), (LSA on in Fig. 3), that in dependence upon the arrival of the selection code (AWC) within the first monitoring time (T1) the analysis component (AW) transmits the incoming call criterion (RK) to the selected control unit (e. g. STT2) (LP2 on in Fig. 3), and that the interface lines (e. g. S2) of the one or the other contril component are connected to the interface lines (S0) of the line matching component (LAT1) following the arrival of the seizure confirmation criterion (S2 on in Fig. 3).

3. Circuit arrangement as claimed in claim 1 and 2, characterised in that following the expiration of the first monitoring time (T1), the timer (ZG) is switched on in order to determine the second monitoring time (T2 in Fig. 4) procided for the arrival of the seizure confirmation criterion (LS2 on in Fig. 3).

4. Circuit arrangement as claimed in claim 1 characterised in that when a seizure confirmation criterion fails to appear within the second monitoring time (T2), the timer (ZG) is switched on in order to determine the third monitoring time (T3) following the expiration of which the analysis component (AW) transmits a criterion (e. g. LK2 on in Fig. 4) for the compulsory disconnection of the local operation via an additional control line (LK1, LK2) within the interface lines (S1, S2) which lead to the control components (STT1, STT2).

5. Circuit arrangement as claimed in claim 1, characterised in that by the evaluation of the confirmation criterion which follows a clearing signal (SZ), (LSA off, DSA off in Fig. 3; LPA off, DEA off in Fig. 5), the timer (ZG) is reconnected in order to determine the fourth monitoring time (T4) following the expiration of which the connection is broken between the interface lines (S1 or S2) of the contril component (STT1 or STT2) ;signed to the teleprinter which was previc ⁄ not selected and the interface lines (S0) o: :e matching component (LAT1).

6. Circuit arrangement as claimed in claim 1, characterised in that the contril component (STT1) assigned to a teleprinter (e. g. FS1) and the line matching component (LAT1) form a remote switching unit (FSE1), whereas the contril component (STT2) assigned to the other teleprinter (FS2) and the analysis component (AW) form a second remote switching unit (FSE2), that the remote switching units (FSE1, FSE2) are each arranged within the teleprinters (FS1, FS2), and that only the remote switching unit (FSE1) which contains the line matching component (LAT1) is connected to the connection line (ASL), and that the interface lines (S1, S2, S0) run between the remote switching units (FSE1, FSE2) via plugin connections.

7. Circuit arrangement as claimed in claim 6, characterised in that for operation as an individual machine the interface lines (S1, S2, S0) are connected via a bridge plug.

## Revendications

1. Montage pour bracher au choix un parmi au moins deux téléimprimeurs à une ligne d'abonné (ASL) commune, du type comportant un élément d'adaptation de ligne (LAT1) qui, par pondération des modifications de l'état qui apparaissent dans la direction d'arrivée sur la ligne d'abonné (ASL), fournit des critères déterminés et les transmet à un organe de commande (STT1, STT2) et qui, par évaluation des critères formés dans l'organe de commande (STT1, STT2) réalise des modifications d'états en direction de départ, sur la ligne d'abonné (ASL), caractérisé par le fait

— que les organes de commande (STT1, STT2) associés aux téléimprimeurs (FS1, FS2) sont reliés, par l'intermédiaire de conducteurs d'interfaces (S1, S2), à un organe d'évaluation (AW) qui est, en direction menant à la ligne d'abonné (ASL), relié par l'intermédiaire d'autres conducteurs d'interfaces (S0) à l'élément d'adaptation de ligne (LAT1),

— que dans l'organe d'évaluation sont prévus des moyens de pondérations (BS) qui procèdent à une pondération telle d'un critère d'appel (RG) de départ transmis par un organe de commande (STT1, STT2), d'un critère d'entrée (RK) transmis par un organe d'adaptation de ligne (LAT1) et du critère de débranchement que lors d'un critère d'appel de départ (RG) un moyen de connexion directe (KF) est branché alors que lors d'un critère d'appel d'entrée (RK) sont d'abord branchés un moyen d'évaluation (MAW) pour opérer la pondération d'un critère de sélection (AWC) ainsi qu'une horloge ou minuterie (ZG), le branchement des moyens de liaison directe (KF) ayant lieu, pour la pondération du critère de sélection (AWC), avec un retard au moins égal à une première durée de contrôle (T1) déterminée par la minuterie (ZG),

— que la minuterie (ZG) détermine une seconde durée de contrôle (T2) pour l'apparition, correcte dans le temps, d'un critère d'occupation et une troisième durée de contrôle ou de surveillance (T3) pour le brachement, correct dans le temps, du fonctionnement en trafic local, et

— que par suite de la pondération du critère de branchement (SZ), la minuterie (ZG) est à nouveau brachée et détermine une quatrième durée de surveillance ou de contrôle (T4) à l'écoulement de laquelle le moyen de connexion directe est débranché.

2. Montage selon la revendication 1, caractérisé par le fait

— que l'organe d'évaluation (AW) établit, par suite de la pondération d'un critère d'appel de départ (RG en figure 5), et sans retard dans le tempfs, la connexion directe entre les conducteurs d'interfaces (S1 ou S2) de l'organe de commande (STT1, STT2) émettant le critère d'appel, et les conducteurs d'interfaces (S0) menant à l'organe d'adaptation (LAT1) et transmet le critère d'appel à l'organe d'adaptation de ligne (LAT1), (LPA branché, LSA débraché en figure 5),

— que par suite de la pondération d'un critère d'appel d'entrée (RK en figure 3), l'organe d'évaluation (AW) émet (LSA branché en figure 3) un critère de confirmation d'appel (RB en figure 3), que l'organe d'évaluation (AW) émet, en fonction de l'arrivée du code de sélection (AWC), pendant la première durée de contrôle (T1), le critère d'appel d'entrée (RK) à l'unité de commande sélectionnée (par exemple STT2) (LP2 branché en figure 3), et

— que les conducteurs de l'interface (par exemple S2) de l'un ou de l'autre organe de contrôle sont reliés avec les conducteurs de l'interface (S0) de l'organe d'adaptation de ligne (LAT1), après l'arrivée du critère de confirmation de l'occupation (S2 branché en figure 3).

3. Montage selon la revendication 1 ou 2, caractérisé par le fait qu'après écolulement de la première durée de contrôle ou de surveillance (T1), la minuterie (ZG) est branchée pour déterminer la seconde durée de surveillance (T2 en figure 4) prévue pour l'arrivée du critère de confirmation de l'occupation (LS2 branché en figure 3).

4. Montage selon la revendication 1, caractérisé par le fait qu'en l'absence du critère de confirmation de l'occupation pendant la seconde durée de surveillance (T2), la minuterie (ZG) est branchée pour déterminder la troisième durée de surveillance ou de contrôle (T3), à l'écoulement de laquelle l'organe d'évaluation (AW) émet un critère (par exemple LK2 branché en figure 4) pour le de branchement d'office du fonctionnement local, par l'intermédiaire d'un conducteur supplémentaire (LK1, LK2) prévu dans les conducteurs d'interfaces (S1, S2) menant aux organes de commande (STT1, STT2).

5. Montage selon la revendication 1, caractérisé par le fait que par suite de la pondération du critère de confirmation (LSA débranché, DSA débranché en figure 3; LPA débranché, DEA débranché en figure 5) qui suit un signal de débranchement (SZ), la minuterie (ZG) est à nouveaus branchée pour déterminer la quatrième durée de surveillance (T4) à l'écoulement de laquelle est supprimée la liaison entre d'une part les conducteurs d'interfaces (S1 ou S2) de l'organe de commande (STT1, STT2) associé au téléimprimeur qui n'a pas été sélectionné antérieurement et d'autre part les conducteurs d'interface (S0) de l'organe d'adaptation (LAT1).

6. Montage selon la revendication 1, caractérisé par le fait que l'organe de commande (STT1) associé à l'un des téléimprimeurs (par exemple FS1) et l'organe d'organe d'adaptation de ligne (LAT1) forment un dispositif de branchement à distance (FSE1) de l'organe de commande (STT2) associé à l'autre téléimprimeur et l'organe d'évaluation (AW) forme un second dispositif de brachement à distance (FSE2), que les dispositifs de brachement à distance (FSE1, FSE2) sont respectivement prévus dans les téléimprimeurs (FS1, FS2), que seul le dispositif de commande à distance (FSE1) contenant l'organe d'adaptation de ligne (LAT1) est relié à la ligne d'abonné (ASL) et que les conducteurs d'interfaces (S1, S2, S0) entre les dispositifs de branchement à distance (FSE1, FSE2) passent par des liaisons à enfichage.

7. Montage selon la revendication 6, caractérisé par le fait que pour le fonctionnement comme machine individuelle, les conducteurs d'interfaces (S1, S2, S0) sont reliés par un dispositif d'enfichage en pont.

# FIG 1

# FIG 2

# FIG 3

# FIG 4

# FIG 5